# EUROPÄISCHE PATENTSCHRIFT

(11) **EP 0 945 310 B1**
(45) Veröffentlichungstag und Bekanntmachung des Hinweises auf die Patenterteilung: **03.03.2004**
(21) Anmeldenummer: 99104088.2
(22) Anmeldetag: 18.03.1999
(51) Int. Cl.: B60R 21/20, B62D 1/04, B60R 16/02, B60Q 5/00

(54) **Lenkrad mit Airbag**
Steering wheel with airbag
Volant de direction comportant un coussin gonflable

(30) Priorität: 23.03.1998 DE 29805207 U
(43) Veröffentlichungstag der Anmeldung: 29.09.1999
(73) Patentinhaber: TRW Automotive Safety Systems GmbH, 63743 Aschaffenburg (DE)
(72) Erfinder: Bohn, Stephan, 63773 Goldbach (DE); Frisch, Ralph, 63776 Mömbris (DE)
(74) Vertreter: Degwert, Hartmut, Dipl.-Phys.

(56) Entgegenhaltungen:
- EP-A- 0 704 367
- DE-A- 4 344 615
- GB-A- 2 270 657

## Beschreibung

Die Erfindung betrifft ein Lenkrad gemäß dem Oberbegriff des Anspruchs 1. Ein derartiges Lenkrad ist aus der GB-A-2 270 657 bekannt.

Für die Befestigung eines Airbagmoduls in einem Lenkrad sind bereits zahlreiche Vorschläge gemacht worden. Werden die Lenkräder bei der Endmontage mittels einer auf das Gewindeende der Lenksäule aufgeschraubten Mutter befestigt, kann das Airbagmodul erst nach der Montage des Lenkrades eingesetzt werden, weil es den zentralen Bereich oberhalb der Lenkradnabe einnimmt, der zum Aufschrauben der Mutter frei zugänglich bleiben muß. Will man sogenannte integrierte Airbags vorsehen, bei denen das Lenkrad zusammen mit dem fertig montierten Airbag angeliefert und auf die Lenksäule aufgesetzt wird, so muß man für eine andere Lenkradbefestigung sorgen, für die ebenfalls schon Vorschläge gemacht worden sind, die jedoch alle in der Ausführung aufwendiger und daher teurer sind, als die übliche, millionenfach bewährte Lenkradbefestigung mit einer zentralen Mutter.

Bei dieser Version kann das Airbagmodul erst montiert werden, wenn das Lenkrad auf die Lenksäule aufgesteckt und mit dieser verbunden ist. Für die Befestigung des Airbagmoduls am Lenkrad sind u.a. schon sogenannte Snap-In- oder Clip-Verbindungen vorgeschlagen worden. Herkömmliche Verbindungen dieser Art sind jedoch in der Regel nicht geeignet, weil sie nicht in der Lage sind, die sogenannten "Schußkräfte" bei der Auslösung eines Airbags aufzunehmen oder weil diese Verbindungen bei der dynamischen Belastung ausrasten. Die Verbindungen stehen in Schließstellung üblicherweise unter einer gewissen Vorspannung, wodurch sie gesichert sind und unter normalen Bedingungen nicht ausrasten können. Beim explosionsartigen Aufblasen eines Airbags werden derartige Verbindungen jedoch zunächst im Sinne einer Beseitigung der Vorspannung belastet, so daß sie die Rastvorsprünge nicht mehr sicher hintergreifen können, wenn die unmittelbar darauffolgende Belastung in Vorspannrichtung eintritt.

Soll die Airbagabdeckung zur Betätigung der Hupe benutzt werden, muß das Airbagmodul, zumindest aber die Airbagabdeckung um den erforderlichen Kontaktweg im Lenkrad parallel zur Lenkradachse verschieblich angeordnet werden, parallel zur Lenkradachse verschieblich oder um ein Mindestmaß kippbar angeordnet werden, wozu man auf konstruktiv komplizierte Befestigungsmethoden zurückgreifen muß.

Bei vielen dieser bekannten Befestigungsarten wird bemängelt, daß die fahrerseitige Abdeckkappe relativ zur Lenkradumgebung nur mit erheblichem Aufwand so zu positionieren ist, daß die zur Hupbetätigung erforderlichen Bewegungsfugen zwischen Abdeckkappe und Lenkrad überall gleichmäßig breit sind, weil zwischen den Befestigungspunkten, an denen die Schrauben eingesetzt sind, und den Bereichen, in denen die Bewegungsfugen ausgebildet sind, eine Mehrzahl von Bauteilen angeordnet ist, deren unvermeidbare Fertigungstoleranzen sich im ungünstigsten Fall addieren, was zu deutlich unterschiedlich breiten Bewegungsfugen führt und aus optischen Gründen nicht hingenommen werden kann.

Es besteht somit die Aufgabe, für ein Lenkrad der eingangs genannten Art eine Befestigungsmöglichkeit zu schaffen, mit der die Breite der Bewegungsfugen in engen Grenzen eingehalten werden kann. Die gesuchte Lösung soll konstruktiv und finanziell im Rahmen bisher angewandter Schraubverbindungen liegen, keinen zusätzlichen Platz erfordern und möglichst leicht und zuverlässig ausführbar sein.

Zur Lösung dieser Aufgabe wird erfindungsgemäß vorgeschlagen, daß die Positionierung der Montagebolzen durch die Umschäumung bestimmt ist und auf die vorderen, fahrerseitigen Enden der Montagebolzen in der Abdeckkappe ausgebildete Führungsausnehmungen aufsteckbar sind.

Dabei wird davon ausgegangen, daß man für die richtige Positionierung der Abdeckkappe relativ zur Lenkradumgebung die konstruktiven Ausrichtkoordinaten möglichst in der Nähe der Bewegungsfugen und möglichst in dem gleichen Bauteil vorsehen muß, das für die letztlich nur optisch zu bewertende Breite der Bewegungsfuge zusammen mit der Abdeckkappe selbst maßgeblich ist. Dies ist die am Lenkrad angebrachte Umschäumung. Wenn man gemäß der Erfindung die der Abdeckkappe benachbarten Bereiche in dem gleichen Werkzeug und Herstellungsschritt herstellt, wie die für die Positionierung entscheidenden Koordinaten, können die Fertigungstoleranzen soweit reduziert werden, daß sie an den Bewegungsfugen nicht mehr störend in Erscheinung treten können.

Die erfindungsgemäß zu verwendenden Montagebolzen werden demnach in der Umschäumung positioniert und bestimmen so sehr genau die Lage der Abdeckkappe, die ihrerseits über Führungsausnehmungen auf die Montagebolzen aufsteckbar ist. Es leuchtet ohne weiteres ein, daß auf diese Weise die Bewegungsfugen sehr eng toleriert werden können, insbesondere wenn die Montagebolzen möglichst unmittelbar benachbart zu den Bewegungsfugen angeordnet sind.

Das Airbagmodul kann über die Montagebolzen mit der Abdeckkappe vormontiert werden und dann zusammen mit der Abdeckkappe in das bereits im Kraftfahrzeug angeordnete Lenkrad eingesetzt werden. Anschließend müssen nur noch die Schraubbolzen von der Rückseite des Lenkrades her angezogen werden. Dies entspricht dem bisherigen Umfang der Montagearbeiten bei Schraubverbindungen.

Der Erfindungsgedanke kann ebensogut aber auch mit weiterentwickelten Snap-In-Verbindungen benutzt werden, wenn nur dafür gesorgt wird, daß die maßgeblichen Montagebolzen gemäß dem Grundgedanken der Erfindung angeordnet werden.

Vorteilhafte Ausgestaltungen des Erfindungsgedankens sind in den Unteransprüchen 2 bis 18 beschrieben. Weitere Einzelheiten werden anhand der in den Figuren 1 bis 3 dargestellten Ausführungsbeispiele näher erläutert. Es zeigen:
Figur 1 einen Teilschnitt durch ein Lenkrad mit einem ersten Ausführungsbeispiel der Airbagmodulbefestigung;
Figur 2 einen Schnitt durch ein Lenkrad mit einem zweiten Ausführungsbeispiel der Airbagmodulbefestigung;
Figur 3 eine Variante zu den Ausführungsbeispielen gemäß Figur 1 und 2 für den Aufsteckbereich der Abdeckkappe.

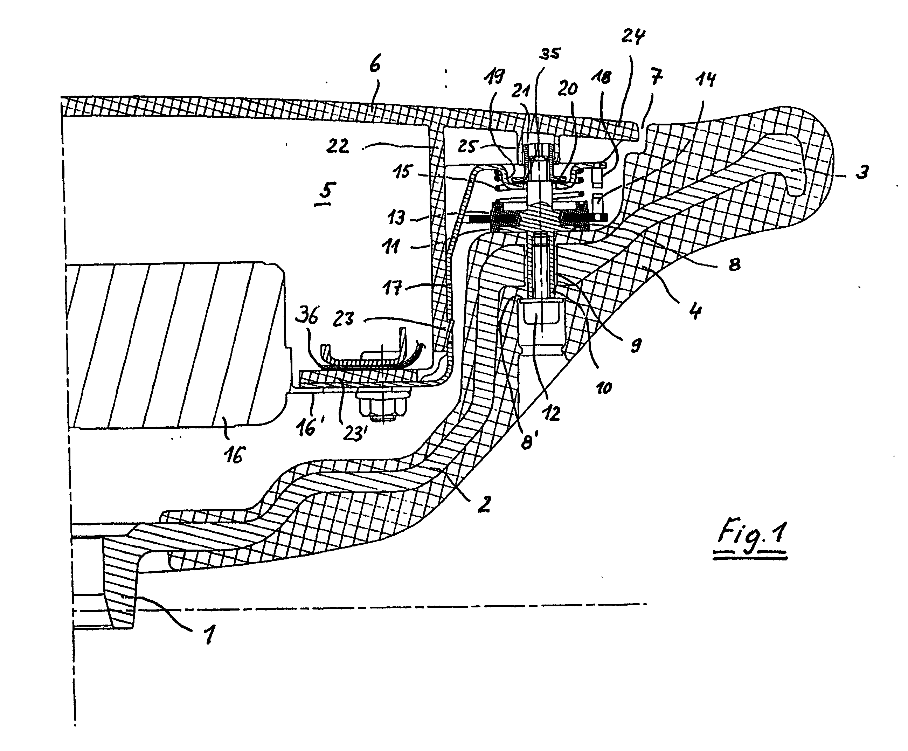

Figur 1 zeigt einen Vertikalschnitt durch eine Lenkradhälfte, bei der ein aus Nabe 1, Speichen 2 und Lenkradkranz 3 bestehendes Skelett mit einer Umschäumung 4 versehen ist. Das Airbagmodul 5, das fahrerseitig eine Abdeckkappe 6 aufweist, ist in eine topfartige Ausnehmung des Lenkrades eingesetzt, wobei zwischen der Umschäumung 4 und der Abdeckkappe 6 eine Bewegungsfuge 7 vorgesehen ist. Zur beweglichen Befestigung des Airbagmoduls 5 sind Montagebolzen 10 vorgesehen, die sich parallel zur Lenkradachse erstrecken. Die Positionierung der Montagebolzen 10 wird durch die Umschäumung 4 bestimmt, wozu in den Speichen 2 größere, ausgeschäumte Durchgangsbohrungen 9 vorgesehen sind. Konzentrisch zu den ausgeschäumten Durchgangsbohrungen 9 sind auf der Ober- und Unterseite der Umschäumung 4 Auflagebereiche 8 und 8' vorgesehen, die sich in einer Ebene senkrecht zur Lenkradachse erstrecken. Diese Auflagebereiche 8, 8' dienen als Widerlager für die Schraubverbindung, wobei sich ein Flansch 11 des Montagebolzens 10 einerseits und der Kopf eines Schraubbolzens 12 andererseits in montiertem Zustand auf den Auflagebereichen 8, 8' abstützen. Oberhalb des Flansches 11 ist eine Scheibe 13 aus Isoliermaterial angeordnet, in die ein Träger für die Pluskontakte 14 eingebettet ist. Auf das fahrerseitige Ende des Montagebolzens 10 ist eine Mutter 21 aufgeschraubt, deren Montageendstellung durch einen Anschlag am Montagebolzen 10 festgelegt ist. Auf die Mutter 21 ist die Abdeckkappe mittels einer Führungsausnehmung 25 aufgesteckt.

Zwischen der Mutter 21 und der Scheibe 13 aus Isoliermaterial ist eine Schraubenfeder 15 und die napfartige Vertiefung 19 einer Montagelasche 17 des Airbagmoduls 5 eingespannt. An der Montagelasche 17 ist der Minuskontakt 18 befestigt. Außerdem ist zwischen der Mutter 21 und der napfförmigen Vertiefung 19 der Montagelasche 17 eine Scheibe 35 aus geräuschdämpfendem Material angeordnet.

Im dargestellten Ausführungsbeispiel umfaßt das Airbagmodul 5 einen Gasgenerator 16 mit einem Montageflansch 16', an dem in an sich bekannter Weise der Gassack 36 über einen nicht bezeichneten Montagering befestigt ist. Mittels der gleichen Befestigungsmittel ist außerdem eine nach innen abgewinkelte Lasche 23' eines umlaufenden Steges 23 der Abdeckkappe 6 und die Montagelasche 17 befestigt. Airbagmodul 5 und Abdeckkappe 6 bilden somit eine Baueinheit, die relativ zur Umschäumung 4 über die an der Abdeckkappe 6 ausgebildeten Führungsausnehmung positioniert ist. Die napfförmige Vertiefung 19 der Montagelasche 17 weist zu diesem Zweck ein Durchgangsloch 20 auf, das um das erforderliche Spiel im Durchmesser größer ist, als der Außendurchmesser des Montagebolzens 10. Mit 24 ist der äußere Bereich der Abdeckkappe 6 bezeichnet, d.h. der Bereich, der in montiertem Zustand zusammen mit der Umschäumung 4 die Bewegungsfuge 7 bildet.

Die aus Airbagmodul 5 und Abdeckkappe 6 bestehende Baueinheit ist in einer Ebene senkrecht zur Lenkradachse durch den Montagebolzen 10 relativ zum Lenkrad positioniert, gleichzeitig aber so angeordnet, daß sie zur Betätigung der Hupkontakte 14 und 18 parallel zur Lenkradachse gegen den Widerstand der Rückstellfeder 15 nach unten gedrückt werden kann. Zur Montage der aus Airbagmodul 5 und Abdeckkappe 6 bestehenden Baueinheit werden die Montagebolzen 10 in die ausgeschäumten Durchgangsbohrungen eingesetzt und über die Schraubbolzen 12 am Lenkrad befestigt, wobei die Umschäumung 4 so ausgebildet ist, daß die Schraubbolzen auch dann nicht nach unten herausfallen können, wenn sie vollständig aus der Gewindebohrung des Montagebolzens herausgeschraubt sind.

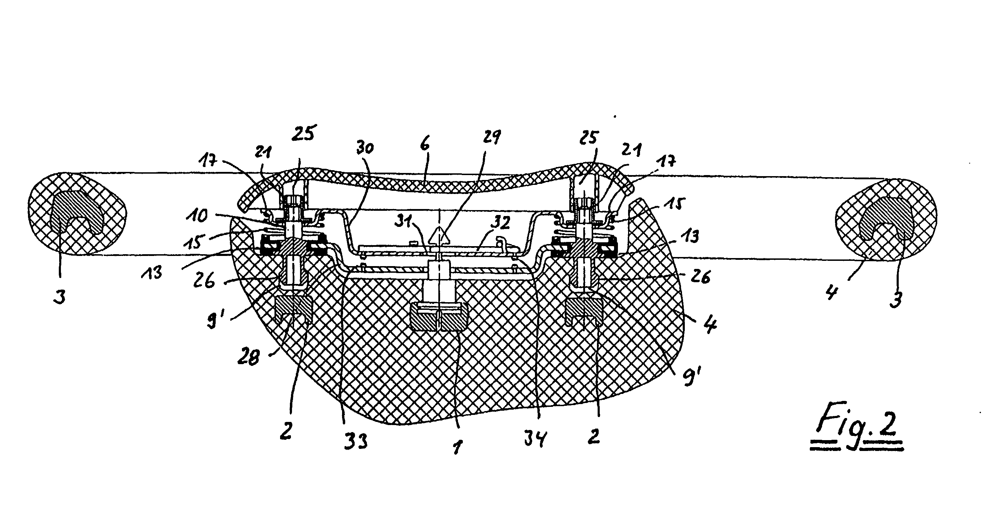

Bei der Ausführungsform gemäß Figur 2 werden ähnliche Montagebolzen 10 mit einer endseitigen Verdickung 26 verwendet, die in montiertem Zustand in Sacklöcher 9' der Umschäumung 4 eingreifen. Dabei sind jeweils zwei Montagebolzen 10 über ein Blech 28 und Scheiben 13 aus Isoliermaterial derart miteinander verbunden, daß das zur Positionierung der Montagebolzen 10 in der Umschäumung 4 erforderliche Spiel vorhanden ist.

Das Blech 28 trägt die Pluskontakte 33, während die Minuskontakte an einem Montageblech 30 ausgebildet sind, das am Airbagmodul befestigt ist und sich ebenfalls über zwei Befestigungsstellen erstreckt. Das Montageblech 30 ist, wie beim Ausführungsbeispiel gemäß Figur 1, mit Montagelaschen 17 versehen, die zur Betätigung der Hupkontakte parallel zur Lenkradachse nach unten gedrückt oder gekippt werden können. Die Abdeckkappe 6 ist mittels Führungsausnehmungen 25 wieder auf die fahrerseitig auf die Montagebolzen 10 aufgeschraubten Muttern 21 aufgesteckt.

Abweichend von dem Ausführungsbeispiel gemäß Figur 1 ist bei Figur 2 jedoch eine Snap-In- oder Rastverbindung vorgesehen, die für je zwei Befestigungsstellen einen sich in Richtung der Lenkradachse erstreckenden Snap-Bolzen 29 und eine am Montageblech 30 befestigte Sperrklinke umfaßt. Der Snap-Bolzen 29 ist mit seinem hinteren Ende in einem Skeletteil 1 des Lenkrades befestigt und in bekannter Weise mit einem kegeligen vorderen Ende ausgestattet. Mit diesem Ende kann der Snap-Bolzen 29 eine Durchtrittsöffnung 31 im Montageblech 30 durchgreifen und in der Montageendstellung die Sperrklinke 32 hintergreifen. Mit einer derartigen Snap-In- oder Rastverbindung kann selbstverständlich die Zeit bei der Endmontage des Airbagmoduls gegenüber einer Schraubverbindung noch verkürzt werden.

Soweit die Bezugsziffern im Rahmen der Beschreibung zu Figur 2 nicht erwähnt worden sind, haben die betroffenen Bauteile die gleiche Ausgestaltung und Funktion, wie beim Ausführungsbeispiel gemäß Figur 1.

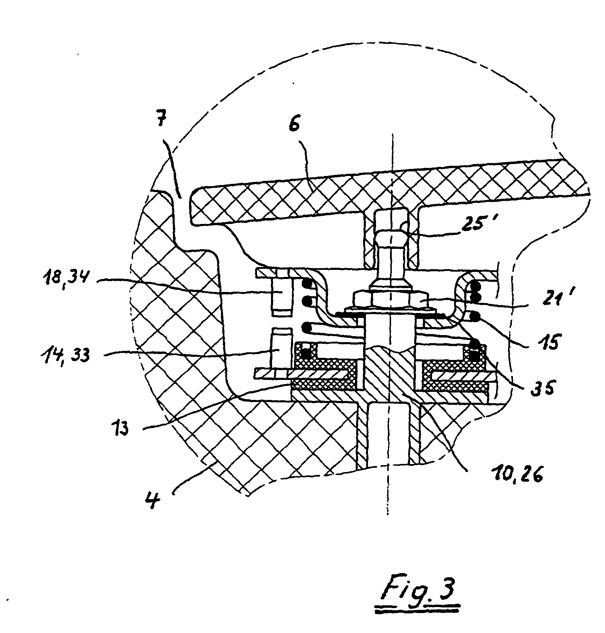

Die Variante gemäß Figur 3 unterscheidet sich von den Ausführungsbeispielen gemäß Figur 1 und Figur 2 nur dadurch, daß die Abdeckkappe 6 mit einer Führungsausnehmung 25' direkt auf das fahrerseitige Ende des Montagebolzens 10, 26 und nicht auf die Mutter 21' aufgesteckt ist. Auf diese Weise kann verhindert werden, daß das unvermeidliche Gewindespiel zwischen der Mutter 21' und dem Montagebolzen 10, 26 die Bewegungsfuge 7 zwischen Abdeckkappe 6 und Umschäumung 4 beeinflußt.

Aus der vergrößerten Darstellung gemäß Figur 3 ist ersichtlich, daß zwischen der äußeren Begrenzung des Montagebolzens 10, 26 und dem umgebenden Bauteil ein radiales Spiel vorgesehen ist, damit diese Bauteile die Ausrichtung der Abdeckkappe 6 relativ zur Umschäumung 4 in einer Ebene senkrecht zur Lenkradachse nicht behindern können. Damit ist eine Befestigungsmöglichkeit für ein Airbagmodul in einem Lenkrad geschaffen, bei der die Abdeckkappe in einer Ebene senkrecht zur Lenkradachse exakt ausgerichtet werden kann, zur Betätigung der Hupkontakte parallel zur Achse aber beweglich angeordnet ist.

Der Ausführungsform gemäß Figur 1 sind die Montagebolzen so ausgelegt, daß sie die bei einer Auslösung des Airbags auftretenden "Schußkräfte" übernehmen können. Sie bestehen aus Stahl oder anderen hochfesten Werkstoffen. Bei der Ausführungsform gemäß Figur 2 werden die "Schußkräfte" von den Snap-In- oder Rastverbindungen aufgenommen, so daß die Montagebolzen festigkeitsmäßig nur für die Positionierung der Abdeckkappe relativ zum Lenkrad ausgelegt werden müssen. Für diese Zwecke können sie aus geeigneten Kunststoffen bestehen, wodurch sich zusätzlich eine Gewichtsersparnis gegenüber der Ausführungsform gemäß Figur 1 ergeben kann.

## Patentansprüche

1. Lenkrad mit einem aus Nabe (1), Speichen (2) und Lenkradkranz (3) bestehenden, mit einer Umschäumung (4) versehenen Skelett und einem in eine zentrale Ausnehmung des Lenkrades eingesetzten Airbagmodul (5), das fahrerseitig eine Abdeckkappe (6, 24) aufweist und das zur Betätigung einer akustischen Signaleinrichtung unter Überwindung einer Rückstellkraft in Richtung der Lenkradachse relativ zum Lenkrad bewegbar ist, wobei zwischen der Abdeckkappe (6, 24) und der Umschäumung (4) eine Bewegungsfuge (7) vorgesehen ist und wobei zur beweglichen Befestigung des Airbagmoduls (5) im Lenkrad Montagebolzen (10) vorgesehen sind, die sich parallel zur Lenkradachse erstrecken, **dadurch gekennzeichnet, daß** die Positionierung der Montagebolzen (10) durch die Umschäumung (4) bestimmt ist und auf die vorderen, fahrerseitigen Enden der Montagebolzen (10) in der Abdeckkappe (6, 24) ausgebildete Führungsausnehmungen (25) aufsteckbar sind.

2. Lenkrad nach Anspruch 1, **dadurch gekennzeichnet, daß** in den Speichen (2) größere, ausgeschäumte Durchgangsbohrungen (9) vorgesehen sind und daß die Umschäumung (4) um die Durchgangsbohrungen (9) herum auf der Ober- und Unterseite Auflagebereiche (8, 8') aufweist, die sich in einer Ebene senkrecht zur Lenkradachse erstrecken.

3. Lenkrad nach Anspruch 2, **dadurch gekennzeichnet, daß** sich die Montagebolzen (10) durch die Durchgangsbohrungen (9) hindurch erstrecken und mit einem Flansch (11) auf den fahrerseitigen Auflagebereichen (8) abstützen.

4. Lenkrad nach Anspruch 3, **dadurch gekennzeichnet, daß** die Montagebolzen (10) an ihren hinteren Enden mit Innengewinde versehen und mittels Schraubbolzen (12) am Lenkrad befestigt sind, deren Köpfe sich auf den Auflagebreich (8') an der Unterseite der Umschäumung (4) abstützen.

5. Lenkrad nach einem der Ansprüche 1 bis 4, **dadurch gekennzeichnet, daß** auf die Montagebolzen (10) Scheiben (13) aus Isoliermaterial aufgesteckt sind, die an den Flanschen (11) anliegen und in die Träger für die Pluskontakte (14) eingebettet sind.

6. Lenkrad nach Anspruch 5, **dadurch gekennzeichnet, daß** das Airbagmodul (5) mit Montagelaschen (17) versehen ist, die endseitig napfartige Vertiefungen (19) mit Durchgangslöchern (20) für die Montagebolzen (10) aufweisen, wobei zwischen den Scheiben (13) aus Isoliermaterial und den Montagelaschen (17) Rückstellfedern (15) angeordnet sind, die mittels auf die vorderen, mit Außengewinde versehenen Enden der Montagebolzen (10) aufgeschraubte Muttern (21) vorgespannt sind.

7. Lenkrad nach Anspruch 6, **dadurch gekennzeichnet, daß** die napfartigen Vertiefungen (19) und/oder die Scheiben (13) aus Isoliermaterial gleichzeitig zur Führung der als Schraubenfedern ausgebildeten Rückstellfedern (15) dienen.

8. Lenkrad nach einem der Ansprüche 5 bis 7, **dadurch gekennzeichnet, daß** die Minuskontakte (18) im Bereich der napfartigen Vertiefungen (19) ausgebildet sind.

9. Lenkrad nach einem der Ansprüche 1 bis 8, **dadurch gekennzeichnet, daß** die Montagebolzen (10) einen Anschlag aufweisen, durch den die Endposition der aufgeschraubten Muttern (21) bestimmt ist.

10. Lenkrad nach einem der Ansprüche 1 bis 9, **dadurch gekennzeichnet, daß** zwischen den Muttern (21) und den napfartigen Vertiefungen (19) Scheiben (35) aus geräuschdämpfendem Material angeordnet sind.

11. Lenkrad nach einem der Ansprüche 1 bis 10, **dadurch gekennzeichnet, daß** die Muttern (21) für das Aufstecken der Führungsausnehmungen (25) in der Abdeckkappe (6, 24) ausgebildet sind.

12. Lenkrad nach einem der Ansprüche 1 bis 10, **dadurch gekennzeichnet, daß** die vorderen Enden der Montagebolzen (10) über die Muttern (21') vorstehen und für das Aufstecken der Führungsausnehmungen (25') in der Abdeckkappe (6, 24) ausgebildet sind.

13. Lenkrad nach einem der Ansprüche 1 bis 4, **dadurch gekennzeichnet, daß** die Montagebolzen (10) mit ihren hinteren Enden in Sacklöchern (9') der Umschäumung (4) angeordnet sind und sich mit einem Flansch (11) auf Auflagebereichen (8) an der Oberseite der Umschäumung (4) abstützen, die sich in einer Ebene senkrecht zur Lenkradachse erstrecken.

14. Lenkrad nach Anspruch 13, **dadurch gekennzeichnet, daß** die hinteren Enden der Montagebolzen (10) mit einer Verdickung (26) in einen erweiterten Bereich der Sacklöcher (9') eingreifen.

15. Lenkrad nach Anspruch 13 oder 14, **dadurch gekennzeichnet, daß** die Montagebolzen (10) über ein Blech (28) miteinander verbunden sind, das in Scheiben (13) aus Isoliermaterial eingebettet ist und an dem die Pluskontakte (33) angeordnet sind, wobei die Verbindung eine Ausrichtung und Positionierung der Montagebolzen (10) in der Umschäumung (4) zuläßt.

16. Lenkrad nach Anspruch 6 und einem der Ansprüche 13 bis 15, **dadurch gekennzeichnet, daß** die Montagelaschen (17) an einem Montageblech (30) ausgebildet sind, das eine zentrale Durchtrittsöffnung (31) für einen sich in Richtung der Lenkradachse erstreckenden Snap-Bolzen (29) aufweist, der von einer am Montageblech (30) befestigten Sperrklinke (32) hintergreifbar ist und mit seinem anderen Ende in einem Skeletteil (1) des Lenkrades befestigt ist.

17. Lenkrad nach Anspruch 16, **dadurch gekennzeichnet, daß** die Minuskontakte (34) gegenüber den Pluskontakten (33) am Montageblech (30) angeordnet sind.

## Claims

1. A steering wheel comprising a skeleton provided with a foamed sheathing (4) and consisting of a hub (1), spokes (2) and a steering wheel rim (3), and comprising a gas bag module (5) which is inserted in a central recess of the steering wheel and includes a cover cap (6, 24) on the side facing the driver, and which for actuating an acoustical signal device is movable towards the steering wheel axis relative to the steering wheel in overcoming a return force, a movement joint (7) being provided between the cover cap (6, 24) and the foamed sheathing (4), and mounting studs (10) extending parallel to the steering wheel axis being provided for movably securing the gas bag module (5) in the steering wheel, **characterized in that** the positioning of the mounting studs (10) is defined by the foamed sheathing (4), and guide recesses (25) configured in the cover cap (6, 24) can be attached to the front ends of the mounting studs (10) on the side facing the driver.

2. The steering wheel as set forth in claim 1, **characterized in that** largish, foam-coated through-holes (9) are provided in the spokes (2) and that the foamed sheathing (4) includes supporting portions (8, 8') in the region around the through-holes (9) on the upper and lower sides, the supporting portions extending in a plane perpendicular to the steering wheel axis.

3. The steering wheel as set forth in claim 2, **characterized in that** the mounting studs (10) extend through the through-holes (9) and rest, by means of a flange (11), on the supporting portions (8) on the side facing the driver.

4. The steering wheel as set forth in claim 3, **characterized in that** the mounting studs (10) are provided at their rear ends with a female thread and are secured to the steering wheel by means of bolts (12), the heads of which rest on the supporting portion (8') at the lower side of the foamed sheathing (4).

5. The steering wheel as set forth in any of the claims 1 to 4, **characterized in that** attached to the mounting studs (10) are washers (13) of an insulating material, which contact the flanges (11) and are embedded in the supports for the positive contacts (14).

6. The steering wheel as set forth in claim 5, **characterized in that** the gas bag module (5) is provided with mounting tabs (17) having dished recesses (19) at the end with through-holes (20) for the mounting studs (10), return springs (15) being arranged between the washers (13) of insulating material and the mounting tabs (17), the return springs (15) being preloaded by means of nuts (21) screwed onto the front male-threaded ends of the mounting studs (10).

7. The steering wheel as set forth in claim 6, **characterized in that** the dished recesses (19) and/or the washers (13) of insulating material at the same time serve to guide the return springs (15) configured as helical springs.

8. The steering wheel as set forth in any of the claims 5 to 7, **characterized in that** the negative contacts (18) are configured in the region of the dished recesses (19).

9. The steering wheel as set forth in any of the claims 1 to 8, **characterized in that** the mounting studs (10) include a stop which defines the final position of the screwed-on nuts (21).

10. The steering wheel as set forth in any of the claims 1 to 9, **characterized in that** arranged between the nuts (21) and the dished recesses (19) are washers (35) of a noise-dampening material.

11. The steering wheel as set forth in any of the claims 1 to 10, **characterized in that** the nuts (21) are configured for attaching the guide recesses (25) in the cover cap (6, 24).

12. The steering wheel as set forth in any of the claims 1 to 10, **characterized in that** the front ends of the mounting studs (10) protrude beyond the nuts (21') and are configured for attaching the guide recesses (25') in the cover cap (6, 24).

13. The steering wheel as set forth in any of the claims 1 to 4, **characterized in that** the mounting studs (10) are arranged by their rear ends in blind holes (9') of the foamed sheathing (4) and rest on supporting portions (8) on the upper side of the foamed sheathing (4) by a flange (11), the supporting portions extending in a plane perpendicular to the steering wheel axis.

14. The steering wheel as set forth in claim 13, **characterized in that** the rear ends of the mounting studs (10) engage a widened portion of the blind holes (9') by means of a thickened portion (26).

15. The steering wheel as set forth in claim 13 or 14, **characterized in that** the mounting studs (10) are connected to each other by a plate (28) which is embedded in washers (13) of an insulating material and on which the positive contacts (33) are arranged, this connection permitting orientation and positioning of the mounting studs (10) in the foamed sheathing (4).

16. The steering wheel as set forth in claim 6 and any of claims 13 to 15, **characterized in that** the mounting tabs (17) are configured on a mounting plate (30) having a central through opening (31) for a snap-action stud (29) extending in the direction of the steering wheel axis, a locking pawl (32) secured to the mounting plate (30) being adapted to engage behind the snap-action stud (29), the other end of the snap-action stud being secured in a skeleton part (1) of the steering wheel.

17. The steering wheel as set forth in claim 16, **characterized in that** the negative contacts (34) are arranged opposite the positive contacts (33) on the mounting plate (30).

## Revendications

1. Volant de direction comportant un squelette constitué par un moyeu (1), des rayons (2) et une couronne (3) de volant de direction et pourvu d'un revêtement en mousse (4), et comportant un module de coussin à gaz (5) inséré dans un évidement central du volant de direction, qui présente côté conducteur un couvercle (6, 24) et qui, pour actionner un dispositif de signal acoustique, est déplaçable selon l'axe du volant de direction par rapport au volant de direction en surmontant une force de rappel, une fente de mouvement (7) étant prévue entre le couvercle (6, 24) et le revêtement en mousse (4), et des goujons de montage (10) qui s'étendent parallèlement à l'axe du volant étant prévus dans le volant de direction pour la fixation mobile du module de coussin à gaz (5), **caractérisé en ce que** le positionnement des goujons de montage (10) est déterminé par le revêtement en mousse (4) et **en ce que** des évidements de guidage (25) réalisés dans le couvercle (6, 24) peuvent être montés par enfichage sur les extrémités antérieures côté conducteur.

2. Volant de direction selon la revendication 1, **caractérisé en ce que** dans les rayons (2) sont prévus des trous de passage (9) de grande taille et enrobés de mousse et **en ce qu'**autour des trous de passage (9), le revêtement en mousse (4) présente, sur les faces supérieure et inférieure, des zones d'appui (8, 8') qui s'étendent dans un plan perpendiculairement à l'axe du volant de direction.

3. Volant de direction selon la revendication 2, **caractérisé en ce que** les goujons de montage (10) s'étendent à travers les trous de passage (9) et prennent appui avec une bride (11) sur les zones d'appui côté conducteur.

4. Volant de direction selon la revendication 3, **caractérisé en ce que** les goujons de montage (10) sont pourvus d'un taraudage sur leurs extrémités postérieures et sont fixés sur le volant de direction au moyen de boulons (12), dont les têtes prennent appui sur la zone d'appui (8'), sur la face inférieure du revêtement en mousse (4).

5. Volant de direction selon l'une des revendications 1 à 4, **caractérisé en ce que** sur les goujons de montage (10) sont enfichées des rondelles (13) en matériau isolant qui reposent sur les brides (11) et qui sont noyées dans les supports pour les contacts positifs (14).

6. Volant de direction selon la revendication 5, **caractérisé en ce que** le module de coussin à gaz (5) est pourvu de pattes de montage (17) qui présentent, du côté extrémité, des renfoncements (19) en forme de cuvettes avec des trous de passage (20) pour les goujons de montage (10), des ressorts de rappel (15) étant agencés entre les rondelles (13) en matériau isolant et les pattes de montage (17), lesquels sont précontraints au moyen d'écrous (21) vissés sur les extrémités antérieures pourvues d'un filetage, des goujons de montage (10).

7. Volant de direction selon la revendication 6, **caractérisé en ce que** les renfoncements (19) en forme de cuvettes et/ou les rondelles (13) en matériau isolant servent simultanément de guidage des ressorts de rappel (15) réalisés sous forme de ressorts hélicoïdaux.

8. Volant de direction selon l'une des revendications 5 à 7, **caractérisé en ce que** les contacts négatifs (18) sont réalisés dans la zone des renfoncements (19) en forme de cuvettes.

9. Volant de direction selon l'une des revendications 1 à 8, **caractérisé en ce que** les goujons de montage (10) présentent une butée qui définit la position finale des écrous (21) vissés.

10. Volant de direction selon l'une des revendications 1 à 9, **caractérisé en ce qu'**entre les écrous (21) et les renfoncements (19) en forme de cuvettes sont agencées des rondelles (35) en matériau insonorisant.

11. Volant de direction selon l'une des revendications 1 à 10, **caractérisé en ce que** les écrous (21) sont réalisés pour enficher les évidements de guidage (25) dans le capuchon (6, 24).

12. Volant de direction selon l'une des revendications 1 à 10, **caractérisé en ce que** les extrémités antérieures des goujons de montage (10) font saillie au-delà des écrous (21') et sont réalisées pour enficher les évidements de guidage (25') dans le capuchon (6, 24).

13. Volant de direction selon l'une des revendications 1 à 4, **caractérisé en ce que** les goujons de montage (10) sont agencés avec leurs extrémités postérieures dans des trous borgnes (9') du revêtement en mousse (4) et prennent appui avec une bride (11) sur des zones d'appui (9), sur la face supérieure du revêtement en mousse (4), qui s'étendent dans un plan perpendiculaire à l'axe du volant de direction.

14. Volant de direction selon la revendication 13, **caractérisé en ce que** les extrémités postérieures des goujons de montage (10) s'engagent avec un renflement (26) dans une zone évasée des trous borgnes (9').

15. Volant de direction selon la revendication 13 ou 14, **caractérisé en ce que** les goujons de montage (10) sont reliés l'un à l'autre par une tôle (28) qui est noyée dans des rondelles (13) en matériau isolant et sur lequel sont agencés les contacts positifs (33), la liaison permettant un alignement et un positionnement des goujons de montage (10) dans le revêtement en mousse (4).

16. Volant de direction selon la revendication 6 et selon l'une des revendications 13 à 15, **caractérisé en ce que** les pattes de montage (17) sont réalisées sur une tôle de montage (30) qui présente un orifice de passage (31) pour un goujon d'encliquetage (29) s'étendant en direction de l'axe du volant de direction, qui peut être engagé par l'arrière par un cliquet de blocage (32) fixé sur la tôle de montage et qui est fixé par son autre extrémité dans une partie de squelette (1) du volant de direction.

17. Volant de direction selon la revendication 16, **caractérisé en ce que** les contacts négatifs (34) sont agencés à l'opposé des contacts positifs (33) sur la tôle de montage (30).
